# EUROPÄISCHE PATENTSCHRIFT

(11) **EP 1 812 144 B1**
(45) Veröffentlichungstag und Bekanntmachung des Hinweises auf die Patenterteilung: **28.01.2009**
(21) Anmeldenummer: 05786973.7
(22) Anmeldetag: 16.09.2005
(51) Int. Cl.: B01D 53/94, F01N 3/20, B01D 53/90

(54) **DOSIERSYSTEM SOWIE VERFAHREN ZUM BETREIBEN EINES DOSIERSYSTEMS**
DOSING SYSTEM AND METHOD FOR THE OPERATION OF A DOSING SYSTEM
SYSTEME DE DOSAGE ET PROCEDE POUR FAIRE FONCTIONNER CE DERNIER

(30) Priorität: 10.11.2004 DE 102004054238
(43) Veröffentlichungstag der Anmeldung: 01.08.2007
(73) Patentinhaber: Robert Bosch GmbH, 70442 Stuttgart (DE)
(72) Erfinder: RIPPER, Wolfgang, 70327 Stuttgart (DE); BUERGLIN, Markus, 71254 Ditzingen (DE); MAYER, Thorsten, 67551 Worms (DE); OFFENHUBER, Michael, 5421 Adnet (DE); HEILIG, Dirk, 71254 Ditzingen (DE)
(86) Internationale Anmeldenummer: PCT/EP2005/054606
(87) Internationale Veröffentlichungsnummer: WO 2006/051017

(56) Entgegenhaltungen:
- WO-A-96/08639
- DE-A1- 10 254 981

## Beschreibung

### Stand der Technik

Die Erfindung geht aus von einem Dosiersystem sowie einem Verfahren zum Betreiben eines Dosiersystems nach den Oberbegriffen des Anspruchs 1 und des Anspruchs 13.

Zur Verminderung der in einem Abgas eines Verbrennungsmotors enthaltenen Stickoxide hat sich für solche Verbrennungsmotoren, die mit Luftüberschuss betrieben werden, ein Verfahren zur selektiven katalytischen Reduktion als vorteilhaft erwiesen. Bei diesem Verfahren werden die Stickoxide zusammen mit Ammoniak in einem selektiven Katalysator zu Stickstoff und Wasser umgesetzt. Das zur katalytischen Umsetzung der Stickoxide notwendige Reduktionsmittel wird anstelle des Ammoniaks in Form einer wässrigen Hamstofflösung im Fahrzeug mitgeführt, aus der das Ammoniak durch Hydrolyse der Harnstofflösung in der jeweils zur Umsetzung benötigten Menge freigesetzt werden kann. Bekannt ist, die Harnstofflösung mittels in einer Mischkammer stattfindenden Aerosolbildung in einen dieser nachgeschalteten Abgasstrang einzuspritzen. Bekannt ist auch die Alternative, die Harnstofflösung ohne Luftunterstützung direkt in das Abgas zu dosieren. Problematisch ist jeweils, dass in Abhängigkeit von der Hamstoffkonzentration die Gefahr des Einfrierens der wässrigen Harnstofflösung bei bestimmten Temperaturen besteht. Das Ausdehnungsverhalten der Harnstofflösung ist ähnlich dem von Wasser. Kann sich die gefrierende Harnstofflösung nicht ausdehnen, können im Inneren von Bauteilen, welche mit der Harnstofflösung befüllt sind, unzulässig hohe Drücke auftreten, die zur Zerstörung der Bauteile führen können. Um dies zu verhindern, ist bekannt, im Arbeitsraum eines Dosierventils zumindest teilweise unter Druck nachgebende Wände oder Elemente vorzusehen, die reversibel einen unter Eisbildung entstehenden Druck im Arbeitsraum kompensieren können. Weiterhin ist bekannt, zum Dosieren der Hamstofflösung Dosierpumpen statt Dosierventile einzusetzen. Die EP 1761690 beschreibt ein druckluftunterstütztes System, bei dem bei einem Entleervorgang eines Dosierventils ein Gasdurchfluss durch eine Mischkammer aufrechterhalten wird. Die DE 10254981 offenbart ein Rückspülen unter Verwendung von Luft. Die WO 00/21881 beschreibt ein Entleeren eines Dosiersystems durch Ansaugen von Tankluft.

### Vorteile der Erfindung

Es wird ein alternatives Dosiersystem vorgeschlagen mit einem Dosiermittel zum Dosieren einer Flüssigkeit, insbesondere zum Dosieren einer wässrigen Harnstofflösung zur Nachbehandlung von Abgasen aus Verbrennungsmotoren, wobei die Flüssigkeit in einer Normalbetrieb-Förderrichtung von einem Vorratstank durch das Dosiermittel, in einen Abgasstrang förderbar ist, wobei wenigstens ein mit der Flüssigkeit beaufschlagter Bereich zwischen einer Dosierstelle und dem Vorratstank entgegengesetzt zu einer Nomalbetrieb-Förderrichtung der Flüssigkeit entleerbar ist. Eine Schädigung des Dosiermittels oder des Dosiersystems durch eine unerwünschte Eisbildung bei niedrigen Außentemperaturen, insbesondere ein Aufbau von überhöhten Eisdrücken in der Anordnung, wird zuverlässig vermieden. Weiterhin kann bei Vorhandensein einer thermischen Aufbereitungseinheit für die Flüssigkeit ein unerwünschtes Nachverdampfen oder auch ein Auskristallisieren von einem oder mehreren Bestandteilen der Flüssigkeit vermieden werden, wenn die Flüssigkeit in bestimmten Betriebszuständen aus der heißen Zone der Aufbereitungseinheit entfernt werden kann.

Bevorzugt weist das Dosiersystem ein Dosierventil zum Dosieren einer Flüssigkeit auf, wobei der zu entleerende Bereich zwischen einer Förderpumpe und dem Dosierventil entgegengesetzt zur Normalbetrieb-Förderrichtung entleerbar ist. Die Förderpumpe fördert die Flüssigkeit im Normalbetrieb in einer Förderrichtung von einem Vorratstank zu dem Dosierventil. In der Dosierventilanordnung wird die Hamstofflösung ohne Aerosolbildung direkt in den Abgasstrang dosiert. Eine Schädigung des Dosierventils durch eine unerwünschte Eisbildung bei niedrigen Außentemperaturen, insbesondere ein Aufbau von überhöhten Eisdrücken in der Anordnung, wird zuverlässig vermieden.

Vorteilhafterweise ist die Förderpumpe mit umkehrbarer Förderrichtung ausgebildet, so dass eine in der Anordnung vorhandene Komponente zum Entleeren der Anordnung verwendet werden kann und kein zusätzlicher Bauraum benötigt wird. Dazu kann die Drehrichtung der Förderpumpe umgekehrt werden. Es kann auch mit geeigneten Ventilen, beispielsweise 4/2-Wegeventilen, die Förderrichtung umgekehrt werden. Durch den Einsatz von derartigen Ventilen können z.B. auch Membranpumpen als Förderpumpen eingesetzt werden. Die Flüssigkeit kann dann in einen Vorratstank zurückgeführt werden, was den Verbrauch der Flüssigkeit verringert und die Umwelt entlastet, da beim Entleeren keine oder nur eine geringe Menge der Flüssigkeit nach außen freigesetzt wird.

Vorzugsweise ist ein Belüftungsventil in Normalbetrieb-Förderrichtung gesehen stromauf des Dosierventils vorgesehen. Beim Entleeren sind Mittel vorgesehen, um das Belüftungsventil zu öffnen. Der Gasdurchfluss durch das Belüftungsventil verhindert ein Ansaugen von Abgasen und Partikeln in die Dosierventilanordnung und führt stattdessen ein sauberes Gas zu, beispielsweise Frischluft, während die wässrige Harnstofflösung aus der Anordnung entfernt und beispielsweise einem Vorratstank zugeführt wird. Zweckmäßigerweise ist das Dosierventil zum Entleeren gegenüber der Abgasanlage schließbar. Zweckmäßigerweise ist das Belüftungsventil möglichst benachbart zum Dosierventil angeordnet.

Besonders vorteilhaft ist das Dosierventil pulsweitenmoduliert betätigbar. Vorzugsweise ist das Dosierventil stromlos geschlossen. Bei abgestelltem Fahrzeug ist die Anordnung ohne weiteren Aufwand stromauf des Dosierventils vor Kontamination und Verschmutzung geschützt.

In einer bevorzugten Weiterbildung umfasst das Dosiermittel eine Dosierpumpe, mit der die Flüssigkeit zu dem Abgasstrang förderbar ist. Die Dosierpumpe stellt eine genau definierte Menge der Flüssigkeit für den Abgasstrang zur Verfügung. Dieses kann direkt eingespritzt werden oder, insbesondere wenn es als Flüssigkeit zugeführt wird, erst über eine Aufbereitungseinheit aufbereitet und z.B. als Dampf dem Abgasstrang zugeführt werden. Bevorzugt ist die Dosierpumpe als Peristaltik-Pumpe ausgebildet. Es handelt sich dabei um eine volumetrische Fördereinrichtung. Durch in einem Zylinder laufende Rollen wird in einem Schlauch kontinuierlich mit zunehmendem Drehwinkel einbestimmtes Volumen eingeschlossen und gefördert. Ein Abgasgegendruck und ein gegebenenfalls beim verdampfen in einer Aufbereitungseinheit entstehender Druck sind mit diesem Prinzip sicher zu erzeugen. Auch ist die Pumpe selbstsaugend und kann, z.B. durch Umkehr ihrer Drehrichtung, entgegen der Normalbetrieb-Förderrichtung fördern. Somit kann beim Abstellen des Dosiersystems oder des Fahrzeugs die Flüssigkeit aus dem heißen Bereich der Aufbereitungseinheit entfernt werden. Außerdem kann das gesamte System rückwärts bis z.B. in den Vorratstank leer gefördert werden, um die Wintertauglichkeit zu erhöhen. Mit Peristaltikpumpen kann eine Flüssigkeit hochgenau dosiert werden, indem diese über einen Antrieb, z.B. ein elektrischer Schrittmotor, kontinuierlich oder diskontinuierlich gefördert wird. Die dosierte Menge kann mittels des Drehwinkels bzw. die Anzahl der Schritte genau quantifiziert werden.

Vorzugsweise weist die Dosierpumpe eine umkehrbare Drehrichtung auf. Damit kann ohne weitere Komponenten der zu entleerende Bereich entleert werden. Alternativ oder zusätzlich kann zur Umkehr der Förderrichtung der Dosierpumpe wenigstens ein Ventil vorgesehen sein, das bei entsprechender Beschaltung die Flüssigkeit entgegen der Normalbetrieb-Förderrichtung umleitet.

Ist zwischen der Dosierpumpe und dem Abgasstrang eine Aufbereitungseinheit zum Aufbereiten der Flüssigkeit angeordnet, kann die dosierte Flüssigkeitsmenge aufbereitet und insbesondere verdampft werden. Die Aufbereitungseinheit ist vorzugsweise ein beheizter Reaktor, der bevorzugt elektrisch beheizbar ist. Die Aufbereitungseinheit kann so betrieben werden, dass eine momentan zu dosierende Flüssigkeitsmenge, je nach Dosierstrategie kontinuierlich oder diskontinuierlich, zugefördert und dann schnell und möglichst vollständig zu gasförmigen Komponenten aufbereitet wird. Im Falle einer bevorzugten wässrigen Harnstofflösung bildet sich dabei Ammoniak, Wasserdampf und Kohlendioxid. Die gasförmigen Komponenten leiten sich durch die im Phasenübergang stattfindende Volumenzunahme, insbesondere durch den hohen Wasserdampfanteil, selbstständig in den Abgasstrang und sind relativ unproblematisch homogen im Abgas verteilbar. Die extern vom Abgasstrang vorgenommene und bedarfsgerechte erzeugte Ammoniakbildung ermöglicht durch den von der Abgastemperatur unabhängigen Betrieb der Aufbereitungseinheit eine Verbesserung der Stickoxid-Konvertierungsrate. Dies ist besonders für Fahrzeuge mit relativ niedrigen Abgastemperaturen vorteilhaft.

Zweckmäßigerweise ist der zu entleerende Bereich zwischen der Dosierpumpe und dem Abgasstrang angeordnet. Ein Einfrieren der Flüssigkeit oder ein Auskristallieren eines oder mehrerer Bestandteile der Flüssigkeit und eine daraus resultierende Beschädigung des Bereichs kann vermieden werden. Ist die Dosierpumpe als Peristaltikpumpe ausgebildet, kann eine unkontrollierte Aufbereitung der Flüssigkeit durch Nachverdampfen vermieden werden. Die Betriebssicherheit kann erhöht werden. Als Schlauchpumpe ist die Peristaltikpumpe wintertauglich, da das flexible Schlauchmaterial eine Eisbildung tolerieren kann. Grundsätzlich ist jedoch auch jede andere Dosierpumpe geeignet, deren Förderrichtung umkehrbar ist.

Besonders günstig ist, einen porösen Körper im oder am Abgasstrang vorzusehen, der eine Aufbereitung der Flüssigkeit unterstützt. Der Körper kann z.B. mit einem Heizelement beheizbar sein. Vorteilhaft ist, den Körper katalytisch aktiv zu gestalten, um die Aufbereitung weiter zu verbessern. Günstigerweise ist der Körper aus Metallschaum, z.B. aus Edelstahl, Aluminium und dergleichen und/oder aus Keramik gebildet.

Gemäß dem erfindungsgemäßen Verfahren zum Betreiben eines Dosiersystems zum Dosieren einer Flüssigkeit, insbesondere zum Dosieren einer wässrigen Harnstofflösung zur Nachbehandlung von Abgasen aus Verbrennungsmotoren, wobei die Flüssigkeit in einer Förderrichtung zu einem Dosiermittel gefördert und in einen Abgasstrang dosiert wird, wird zeitweise wenigstens ein Bereich zwischen einer Dosierstelle und dem Vorratstank entgegen der Normalbetrieb-Förderrichtung entleert. Das Verfahren ist zuverlässig und prozesssicher.

Bevorzugt wird zum Entleeren eines bevorzugten Dosierventils die Förderrichtung entweder durch Drehrichtungsumkehr einer Förderpumpe oder durch geeignete Ventile, bevorzugt durch 412-Ventile, umgekehrt. Bei einer Drehrichtungsumkehr der Förderpumpe kann Bauraum gespart werden, da eine vorhandene Förderpumpe auch zum Entleeren des Dosierventils genutzt werden kann. Optional kann jedoch auch eine zweite Pumpe zum Entleeren des Bereichs bzw. des Dosierventils vorgesehen sein. Um eine Verunreinigung von Dosierventil und stromauf befindlichen Förderleitungen zu vermeiden wird zweckmäßigerweise zum Entleeren das Dosierventil gegenüber dem Abgasstrang geschlossen.

Günstigerweise wird während des Entleerens Gas, insbesondere Luft, über ein zwischen Förderpumpe und Dosierventil angeordnetes Belüftungsventil angesaugt. Damit kann verhindert werden, dass Partikel und Verunreinigungen aus dem Abgasstrang, insbesondere aus einer Katalysatoranordnung, angesaugt werden.

Wird nach dem Entleeren das Dosierventil zum Abgasstrang hin geöffnet, kann eine geringe, im Dosierventil befindliche Flüssigkeitsmenge in den Abgasstrang entleert werden. Ist das Dosierventil in Einbaulage unterhalb des Abgasstrangs angeordnet, kann die geringe, im Dosierventil befindliche Flüssigkeitsmenge in dessen Zuführleitung für die Flüssigkeit entleert werden. Aufgrund der geringen Menge kann diese sich beim Einfrieren ausdehnen, ohne die Zuführleitung zu beschädigen.

Zum Entleeren des zu entleerenden Bereichs kann auch eine Dosierpumpe eingesetzt werden, deren Förderrichtung umgekehrt werden kann. Dabei kann deren Drehrichtung umgekehrt werden und/oder es kann wenigstens ein Ventil eingesetzt werden, das bei entsprechender Ausgestaltung je nach Ventilstellung in die eine oder die entgegengesetzte Richtung durchlässig ist.

Selbstverständlich können die Ausgestaltungen miteinander kombiniert werden, was eine bedarfsangepasste Betriebsweise des Dosiersystems ermöglicht.

### Zeichnung

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand einer Zeichnung dargestellten Ausführungsbeispielen der Erfindung.

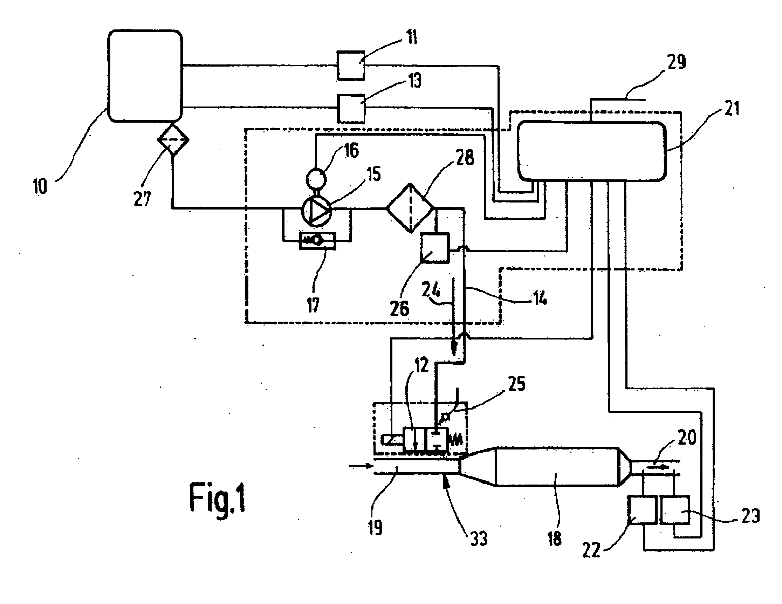

Im Folgenden zeigt
- Fig. 1: eine Dosierventilanordnung in einem Abgasstrang eines Kraftfahrzeugs.

### Beschreibung der Ausführungsbeispiele

Ein bevorzugtes Dosiersystem ist vereinfacht in der Figur 1 dargestellt. In einem Vorratstank 10 ist eine wässrige Harnstofflösung als Reduktionsmittel zur Abgasnachbehandlung zur Reinigung eines Abgases eines Verbrennungsmotors eines Fahrzeugs gespeichert, welche über eine Förderpumpe 15 und eine nicht näher bezeichnete Leitung sowie einen Vorfilter 27 in ein Dosierventil 12 einbringbar ist. Im Vorfilter 27 wird die Harnstofflösung grob gereinigt. Die Förderpumpe 15 ist mit einem Bypassventil 17 umgehbar, welches bei einem zu hohen Druck in einer Normalbetrieb-Förderrichtung 24 stromab der Förderpumpe 15 öffnet. Die Förderpumpe 15 fördert die wässrige Harnstofflösung in die durch einen Pfeil gekennzeichneten Normalbetrieb-Förderrichtung 24 zu dem Dosierventil 12, welches die Harnstofflösung direkt, ohne Luftunterstützung zu einer Aerosolbildung, in einen Abgasstrang dosiert. Stromab der Förderpumpe 15 ist ein Filter 28 angeordnet, mit der die Harnstofflösung gereinigt wird, bevor sie zum Dosierventil 12 gelangt. Stromab des Filters 28 ist ein Sensor 26 zur Bestimmung der Temperatur der Harnstofflösung angeordnet, der über eine nicht näher bezeichnete Signalleitung mit einem Motorsteuergerät 21 verbunden ist.

Zur Abgasreinigung wird die Harnstofflösung an einer Dosierstelle 33 in einen Abgaseinlassbereich 19 eines Katalysators 18 eingebracht. Eine Abgasströmungsrichtung am Abgaseinlassbereich 19 und am Abgasauslassbereich 20 ist jeweils durch Pfeile gekennzeichnet. Am Abgasauslassbereich 20 sind übliche Sensoren 22 bzw. 23 vorgesehen, beispielsweise Drucksensoren, Temperatursensoren, Lambdasonden, NOx-Sensoren und dergleichen, die mittels nicht näher bezeichneten Signalleitungen mit dem Steuergerät 21 und Bestandteil einer üblichen Abgasnachbehandlung sind, verbunden sind. Das Steuergerät 21 steuert weiterhin abhängig von Betriebsparametern und/oder Betriebszuständen über nicht näher bezeichnete Signalleitungen das Dosierventil 12 sowie die Förderpumpe 15 bzw. deren Antriebmotor 16 an. Ferner ist das Steuergerät 21 über einen CAN-Bus 29 mit dem Verbrennungsmotor des Fahrzeugs verbunden. Am Vorratstank 10 sind Sensoren 11 und 13 zur Füllstandsmessung sowie zur Tanktemperaturmessung vorgesehen, die mittels nicht näher bezeichneten Datenleitungen mit der Steuereinheit 21 verbunden sind. Das Dosierventil 12 ist vorzugsweise pulsweitenmoduliert betreibbar.

Gemäß einer bevorzugten Ausgestaltung der Erfindung ist beim Abstellen des Fahrzeugmotors das Dosierventil 12 bzw. ein Bereich 14 einer Förderleitung zwischen der Förderpumpe 15 und dem Dosierventil 12 entgegengesetzt zur Normalbetrieb-Förderrichtung 24 entleerbar, wobei die Förderrichtung der Förderpumpe 15 umgekehrt wird und die Hamstofflösung entgegen der im Betrieb üblichen Normalbetrieb-Förderrichtung 24 in den Vorratstank 10 zurückbefördert wird. Ein stromauf des Dosierventils 12 angeordnetes Belüftungsventil 25 wird geöffnet und das Dosierventil 12 geschlossen. Durch einen Gasdurchfluss, beispielsweise durch Frischluftzufuhr, durch das Belüftungsventil 25 wird ein Ansaugen von Abgas und Partikeln aus dem Katalysator 18 und dem Abgaseinlassbereich 19 vermieden. Optional kann auch eine zweite Pumpe vorgesehen sein, um die Harnstofflösung aus dem Bereich 14 der Förderleitung herauszupumpen. Ist der Bereich 14 entleert, kann das Dosierventil 12 zum Abgasstrang hin geöffnet werden, um eine geringe Restmenge der Harnstofflösung aus dem Dosierventil 12 selbst zu entleeren. Ist das Dosierventil 12 wie dargestellt in Einbaulage oberhalb des Abgasstrangs angeordnet, kann diese geringe Restmenge in den Abgasstrang 19 abgegeben werden. Ist das Dosierventil 12 in Einbaulage unterhalb des Katalysators 18 angeordnet (nicht dargestellt), kann die geringe Restmenge in den Bereich 14 der Förderleitung abgegeben werden, der sich in diesem Fall zumindest benachbart zum Dosierventil 12 unterhalb des Abgasstrangs befindet.

In einer weiteren bevorzugten Ausgestaltung des Dosiersystems wird in einem Vorratstank 10 eine wässerige Harnstofflösung als Reduktionsmittel zur Abgasnachbehandlung zur Reinigung eines Abgases eines Verbrennungsmotors eines Fahrzeugs gespeichert, welche über einen Vorfilter 27 sowie eine als Peristaltikpumpe ausgebildete Dosierpumpe und eine nicht näher bezeichnete Leitung zu einer Dosierstelle 33 eines Abgasstrangs förderbar ist. Im Vorfilter 27 wird die Hamstofflösung grob gereinigt. Die Dosierpumpe fördert die wässrige Harnstofflösung in der Normalbetrieb-FÖrderrichtung 24 zu der Dosierstelle 33. Vor der Dosierstelle 33 ist benachbart zum Abgasstrang eine als thermischer Reaktor ausgebildete Aufbereitungseinheit angeordnet, in der die Harnstofflösung verdampft und direkt in den Abgasstrang dosiert wird.

Zur Abgasreinigung wird die Harnstofflösung an der Dosierstelle 33 in einen Abgaseinlassbereich 19 eines Katalysators 18 eingebracht. Zur besseren Vermischung mit dem Abgas ist ein statischer Mischer stromab der Dosierstelle 33 vorgesehen. Eine Abgasströmungsrichtung am Abgaseinlassbereich 19 und am Abgasauslassbereich 20 ist jeweils durch Pfeile gekennzeichnet. Am Abgasauslassbereich 20 können übliche, zeichnerisch nicht dargestellte Sensoren vorgesehen sein, beispielsweise Drucksensoren, Temperatursensoren, Lambdasonden, NOx-Sensoren und dergleichen, die mittels einer nicht näher bezeichneten Signalleitung mit dem Steuergerät 21 und Bestandteil einer üblichen Abgasnachbehandlung sind, verbunden sind. Das Steuergerät 21 steuert weiterhin abhängig von Betriebsparametern und/oder Betriebszuständen über nicht näher bezeichnete Signalleitungen die Dosierpumpe an. Ferner ist das Steuergerät 21 über einen CAN-Bus 29 mit dem Verbrennungsmotor des Fahrzeugs verbunden. Am Vorratstank 10 sind Sensoren 11 und 13 zur Füllstandsmessung sowie zur Tanktemperaturmessung vorgesehen, die mittels nicht näher bezeichneten Datenleitungen mit der Steuereinheit 21 verbunden sind.

Gemäß einer bevorzugten Ausgestaltung der Erfindung ist beim Abstellen des Fahrzeugmotors die Dosierpumpe bzw. wenigstens ein Bereich 14 einer Förderleitung zwischen der Dosierpumpe und der Dosierstelle 33 entgegengesetzt zur Normalbetrieb-Förderrichtung 24 entleerbar, wobei die Förderrichtung der Dosierpumpe umgekehrt wird und die Harnstofflösung entgegen der im Betrieb üblichen Normalbetrieb-FLirderrichtung 24 in den Vorratstank 10 zurückbefördert wird.

## Patentansprüche

1. Dosiersystem mit einem Dosiermittel (12,15), welches eine eine Normalbetrieb-Förderrichtung gewährleistende Pumpe (15) zum Dosieren einer Flüssigkeit, insbesondere zum Dosieren einer wässrigen Harnstofflösung zur Nachbehandlung von Abgasen aus Verbrennungsmotoren, umfasst, wobei die Flüssigkeit in der Narmalbetrieb-Förderrichtung (24) von einem Vorratstank (10) durch die Pumpe (15) und über eine Dosierstelle (33) eines Abgasstrangs in den Abgasstrang dosierbar ist, wobei wenigstens ein mit der Flüssigkeit beaufschlagter Bereich (14) zwischen der Dosierstelle (33) und der Pumpe (15) entgegengesetzt zu einer Normalbetrieb-Förderrichtung (24) der Flüssigkeit entleerbar ist, wobei die Förderrichtung der Pumpe umkehrbar ist oder die Förderrichtung mittels wenigstens eines Ventils umkehrbar ist, so dass bei umgekehrter Förderrichtung der Bereich entleerbar ist, **dadurch gekennzeichnet, dass** hierbei ein Ansaugen eines Gases im Bereich der Dosierstelle (33) erfolgt.

2. Dosiersystem nach Anspruch 1, **dadurch gekennzeichnet, dass** das Dosiermittel ein Dosierventil (12) umfasst und dass die Flüssigkeit in der Normalbetrieb-Förderrichtung (24) durch das Dosierventil (12) direkt in den Abgasstrang förderbar ist, wobei der mit der Flüssigkeit beaufschlagte und zu entleerende Bereich (14) zwischen der Pumpe (15) und dem Dosierventil (12) angeordnet ist.

3. Dosiersystem nach Anspruch 2, **dadurch gekennzeichnet, dass** in Normalbetrieb-Förderrichtung (24) gesehen stromaufwärts des Dosierventils (12) ein Belüftungsventil (25) vorgesehen ist, das beim Entleeren des Dosierventils (12) öffenbar ist.

4. Dosiersystem nach Anspruch 2 oder 3, **dadurch gekennzeichnet, dass** das Dosierventil (12) pulsweitenmoduliert betätigbar ist.

5. Dosiersystem nach Anspruch 1, **dadurch gekennzeichnet, dass** das Dosiermittel durch die Pumpe (15) gebildet wird.

6. Dosiersystem nach Anspruch 1 oder 5, **dadurch gekennzeichnet, dass** die Pumpe (15) als Peristaltik-Pumpe ausgebildet ist.

7. Dosiersystem nach Anspruch 1, 5 oder 6, **dadurch gekennzeichnet, dass** zwischen der Pumpe (15) und dem Abgasstrang eine Aufbereitungseinheit zum Aufbereiten der Flüssigkeit angeordnet ist.

8. Dosiersystem nach einem der Ansprüche 1, 5, 6 oder 7, **dadurch gekennzeichnet, dass** der zu entleerende Bereich (14) zwischen der Pumpe (15) und dem Abgasstrang angeordnet ist.

9. Verfahren zum Betreiben eines Dosiersystems mit einem Dosiermittel (12,15), welches eine eine Normalbetrieb-Förderrichtung gewährleistende Pumpe (15) zum Dosieren einer Flüssigkeit, insbesondere zum Dosieren einer wässrigen Harnstofflösung zur Nachbehandlung von Abgasen aus Verbrennungsmotoren, umfasst, wobei die Flüssigkeit in der Normalbetrieb-Förderrichtung (24) von einem Vorratstank (10) durch die Pumpe (15) und über eine Dosierstelle (33) eines Abgasstrangs in den Abgasstrang dosiert wird, wobei zeitweise wenigstens ein mit der Flüssigkeit beaufschlagter Bereich (14) zwischen der Dosierstelle (33) und der Pumpe (15) entgegengesetzt zu einer Normalbetrieb-Förderrichtung (24) der Flüssigkeit entleert wird, wobei die Förderrichtung der Pumpe umkehrbar ist oder die Förderrichtung mittels wenigstens eines Ventils umkehrbar ist, so dass bei umgekehrter Förderrichtung der Bereich entleerbar ist, **dadurch gekennzeichnet, dass** hierbei ein Ansaugen eines Gases im Bereich der Dosierstelle (33) erfolgt.

10. Verfahren nach Anspruch 9, **dadurch gekennzeichnet, dass** das Dosiermittel ein Dosierventil (12) umfasst und dass die Flüssigkeit in der Normalbetrieb-Förderrichtung (24) durch das Dosierventil (12) direkt in den Abgasstrang förderbar ist, wobei der mit der Flüssigkeit beaufschlagte und zu entleerende Bereich (14) zwischen der Pumpe (15) und dem Dosierventil (12) angeordnet ist.

11. Verfahren nach Anspruch 10, **dadurch gekennzeichnet, dass** zum Entleeren das Dosierventil (12) geschlossen wird.

12. Verfahren nach Anspruch 10 oder 11, **dadurch gekennzeichnet, dass** nach dem Entleeren das Dosierventil (12) zum Abgasstrang hin geöffnet wird.

13. Verfahren nach Anspruch 9, **dadurch gekennzeichnet, dass** das Dosiermittel durch die Pumpe (15) gebildet wird.

## Claims

1. Metering system with a metering means (12, 15) which comprises a pump (15), ensuring a normal-operation conveying direction, for metering a liquid, in particular for metering an aqueous urea solution for the retreatment of exhaust gases from internal combustion engines, the liquid being meterable in the normal-operation conveying direction (24) from a storage tank (10) through the pump (15) and via a metering point (33) of an exhaust tract into the exhaust tract, at least one region (14), acted upon by the liquid, between the metering point (33) and the pump (15) being capable of being emptied of the liquid opposite to a normal-operation conveying direction (24), the conveying direction of the pump being reversible or the conveying direction being reversible by means of at least one valve, so that, with the conveying direction reversed, the region can be emptied, **characterized in that**, in this case, a suction intake of a gas takes place in the region of the metering point (33).

2. Metering system according to Claim 1, **characterized in that** the metering means comprises a metering valve (12), and **in that** the liquid can be conveyed, in the normal-operation conveying direction (24), through the metering valve (12) directly into the exhaust tract, the region (14) acted upon by the liquid and to be emptied being arranged between the pump (15) and the metering valve (12).

3. Metering system according to Claim 2, **characterized in that**, as seen in the normal-operation conveying direction (24), upstream of the metering valve (12), a ventilation valve (25) is provided, which can be opened during the emptying of the metering valve (12).

4. Metering system according to Claim 2 or 3, **characterized in that** the metering valve (12) can be actuated by pulse-width modulation.

5. Metering system according to Claim 1, **characterized in that** the metering means is formed by the pump (15).

6. Metering system according to Claim 1 or 5, **characterized in that** the pump (15) is designed as a peristaltic pump.

7. Metering system according to Claim 1, 5 or 6, **characterized in that** a treatment unit for treating the liquid is arranged between the pump (15) and the exhaust tract.

8. Metering system according to one of Claims 1, 5, 6 or 7, **characterized in that** the region (14) to be emptied is arranged between the pump (15) and the exhaust tract.

9. Method for operating a metering system with a metering means (12, 15) which comprises a pump (15), ensuring a normal-operation conveying direction, for metering a liquid, in particular for metering an aqueous urea solution for the retreatment of exhaust gases from internal combustion engines, the liquid being metered, in the normal-operation conveying direction (24), from a storage tank (10) through the pump (15) and via a metering point (33) of an exhaust tract into the exhaust tract, at least one region (14), acted upon by the liquid, between the metering point (33) and the pump (15) being emptied of the liquid temporarily opposite to a normal-operation conveying direction (24), the conveying direction of the pump being reversible or the conveying direction being reversible by means of at least one valve, so that, with the conveying direction reversed, the region can be emptied, **characterized in that**, in this case, a suction intake of a gas takes place in the region of the metering point (33).

10. Method according to Claim 9, **characterized in that** the metering means comprises a metering valve (12), and **in that** the liquid can be conveyed, in the normal-operation conveying direction (24), through the metering valve (12) directly into the exhaust tract, the region (14) acted upon by the liquid and to be emptied being arranged between the pump (15) and the metering valve (12).

11. Method according to Claim 10, **characterized in that**, for emptying, the metering valve (12) is closed.

12. Method according to Claim 10 or 11, **characterized in that**, after emptying, the metering valve (12) is opened towards the exhaust tract.

13. Method according to Claim 9, **characterized in that** the metering means is formed by the pump (15).

## Revendications

1. Système de dosage comportant un moyen de dosage (12, 15) ayant une pompe (15) travaillant dans le sens du transfert en mode de fonctionnant normal pour doser un liquide, notamment pour doser une solution aqueuse d'urée, pour le poste de traitement des gaz d'échappement émis par des moteurs à combustion interne,
le liquide étant dosé dans le sens du transfert de fonctionnement normal (24) à partir d'un réservoir d'alimentation (10) par une pompe (15) et par un point de dosage (33) d'une conduite de gaz d'échappement dans cette conduite de gaz d'échappement,
au moins une zone (14) recevant le liquide entre le point de dosage (33) et la pompe (15) se vide du liquide dans la direction opposée au sens de transfert de fonction normal (24), et
le sens de transfert de la pompe étant réversible ou ce sens de transfert pouvant être inversé par au moins une soupape de façon qu'on puisse vider la zone pour un sens de transfert inversé,
**caractérisé en ce qu'**
on aspire du gaz dans la zone du point de dosage (33).

2. Système de dosage selon la revendication 1,
**caractérisé en ce que**
le moyen de dosage comprend une soupape de dosage (12) et le liquide peut être transféré dans le sens de transfert de fonctionnement normal (24) à travers la soupape de dosage (12) directement dans la conduite des gaz d'échappement, la zone (14) sollicitée par le liquide et que l'on, veut vider, se situant entre la pompe (15) et la soupape de dosage (12).

3. Système de dosage selon la revendication 2,
**caractérisé par**
une soupape de ventilation (25) qui s'ouvre pour vider la soupape de dosage (12), en amont de la soupape de dosage (12) selon le sens de transfert (24) en fonctionnement normal.

4. Système de dosage selon la revendication 2 ou 3,
**caractérisé en ce que**
la soupape de dosage (12) est actionnée selon une modulation de largeur d'impulsion.

5. Système de dosage selon la revendication 1,
**caractérisé en ce que**
le moyen de dosage est formé par la pompe (15).

6. Système de dosage selon la revendication 1 ou 5,
**caractérisé en ce que**
la pompe (15) est une pompe péristaltique.

7. Système de dosage selon les revendications 1, 5 ou 6,
**caractérisé par**
une unité de préparation installée entre la pompe (15) et la conduite des gaz d'échappement pour préparer le liquide.

8. Système de dosage selon les revendications 1, 5 ou 6,
**caractérisé en ce que**
la zone (14) à vider se situe entre la pompe (15) et la conduite des gaz d'échappement.

9. Procédé de gestion d'un système de dosage comportant un moyen de dosage (12, 15) ayant une pompe (15) travaillant selon un sens de transfert en fonctionnement normal pour doser un liquide, notamment pour doser une solution aqueuse d'urée pour le poste de traitement des gaz d'échappement émis par des moteurs à combustion interne,
le liquide étant dosé dans le sens de transfert de fonctionnement normal (24) à partir d'un réservoir d'alimentation (10) par la pompe (15) et par un point de dosage (33) d'une conduite de gaz d'échappement pour arriver dans la conduite des gaz d'échappement,
au moins de temps en temps au moins une zone (14) recevant le liquide entre le point de dosage (33) et la pompe (15) est évacuée dans le sens opposé du sens de transfert de fonctionnement normal (24), et
le sens de transfert de la pompe étant réversible ou le sens de transfert s'inversant à l'aide d'une soupape de façon qu'on puisse évacuer la zone, pour un sens de transfert inversé,
**caractérisé en ce qu'**
on aspire un gaz dans la zone du point de dosage (33).

10. Procédé selon la revendication 9,
**caractérisé en ce que**
l'agent de dosage comprend une soupape de dosage (12), et
le liquide peut être transféré directement dans la conduite des gaz d'échappement par la soupape de dosage (12) pour le sens de transfert de fonctionnement normal (24), la zone (14) recevant le liquide que l'on veut vider étant située entre la pompe (15) et la soupape de dosage (12).

11. Procédé selon la revendication 10,
**caractérisé en ce qu'**
on ferme la soupape de dosage (12) pour vider.

12. Procédé selon la revendication 10 ou 11,
**caractérisé en ce qu'**
après avoir vidé la soupape de dosage (12), on l'ouvre en direction de la conduite des gaz d'échappement.

13. Procédé selon la revendication 9,
**caractérisé en ce que**
le moyen de dosage est constitué par la pompe (15).
